(19) Europäisches Patentamt
European Patent Office
Office européen des brevets

(11) EP 2 621 005 A1

(12) # EUROPEAN PATENT APPLICATION
published in accordance with Art. 153(4) EPC

(43) Date of publication:
**31.07.2013 Bulletin 2013/31**

(21) Application number: **11826811.9**

(22) Date of filing: **13.09.2011**

(51) Int Cl.:
***H01M 4/62*** *(2006.01)* ***H01M 4/139*** *(2010.01)*
***H01G 9/058*** *(0000.00)*

(86) International application number:
**PCT/JP2011/071293**

(87) International publication number:
**WO 2012/039366 (29.03.2012 Gazette 2012/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2010 JP 2010213597**

(71) Applicant: **JSR Corporation**
**Minato-ku**
**Tokyo 105-0021 (JP)**

(72) Inventors:
- **MOGI Takeshi**
  **Tokyo 105-0021 (JP)**
- **HONDA Tatsuaki**
  **Tokyo 105-0021 (JP)**
- **MASAKA Fusazumi**
  **Tokyo 105-0021 (JP)**
- **LEE Ho-jin**
  **Tokyo 105-0021 (JP)**

(74) Representative: **TBK**
**Bavariaring 4-6**
**80336 München (DE)**

(54) **BINDER COMPOSITION FOR ELECTRODE**

(57) A binder composition for electrodes, comprising a polymer and an aqueous medium, wherein
the polymer consists of a polymer (A) which has a HOMO value calculated by a semiempirical molecular orbital method of -10 eV or less, a difference between its LUMO value calculated by the semiempirical molecular orbital method and its HOMO value of 10.5 eV or more and a fluorine atom content measured by combustion ion chromatography of 2 to 30 mass%.

An electrochemical device obtained from the above binder composition for electrodes of the present invention can retain adhesion even in a high-temperature environment and its self-discharge in a high-temperature environment is highly suppressed.

EP 2 621 005 A1

## Description

### TECHNICAL FIELD

The present invention relates to a binder composition for electrodes.

### BACKGROUND ART

Remarkable progress has recently been made in the reduction of the size and weight of electronic equipment. Along with this, requirements for the size reduction and the increase of the energy density of electrochemical devices used as drive power sources for the electronic equipment (such as secondary batteries and capacitors) have been becoming higher. As electrochemical devices which meet the above requirements, nickel hydrogen secondary batteries and lithium ion secondary batteries have recently been developed.
Researches for the purpose of improving the characteristic properties of the electrochemical devices are being made on not only the development of a device having a new structure but also parts constituting the existing devices. For example, a large number of researches are now under way to improve electrodes for use in the electrochemical devices.
As the electrodes used in secondary batteries and capacitors, there are known ones, each comprising a collector and an electrode active material layer formed on one side of the collector. As known means of manufacturing these electrodes, there are the following methods. First of all, in one of the methods, an electrode is manufactured by dispersing an electrode active material such as a hydrogen storing alloy or graphite, a thickener such as carboxymethyl cellulose and a binder such as latex containing polymer particles into water to prepare paste or slurry, applying the paste or the slurry to the surface of the collector and drying it to form a coating film, and pressing the obtained coating film to form an electrode active material layer on the surface of the collector.
The above binder has the function of bonding together the electrode active materials and the function of improving adhesion between the electrode active material layer and the collector and is directly connected with the performance of the obtained electrode. Therefore, the characteristic properties of an electrochemical device can be expected to be improved by improving the binder.
Under the above circumstances, various binders are proposed. For example, JP-A 10-302799 proposes a binder which is composed of an aqueous dispersion of a vinylidene fluoride-based polymer containing a functional group; and WO02/039518 proposes a binder containing an ethylene copolymer (A) having a specific HOMO value, a polymer (B) having a specific HOMO value, a specific Tg and a specific gel content, and a liquid medium which dissolves the above polymer (A) but not the above polymer (B). These binders have achieved a certain result.
In recent years, the electrochemical devices have begun to be used in automobiles. For example, secondary batteries such as lithium ion secondary batteries are used as main power sources for electric cars and hybrid cars and capacitors such as electrical double-layer capacitors are used as auxiliary power sources for large-sized cars such as trucks.
Since the use environments (particularly use temperatures) of the automobiles greatly differ according to use district and seasonal factors, electrochemical devices mounted on automobiles are desired to exhibit stable performance at a wide temperature range. However, when conventionally known binder compositions are used in automobiles, it has been reported that various problems occur due to their use temperatures. For instance, an electrochemical device manufactured by using the binder of the above JP-A 10-302799 has such high oxidation resistance that it can withstand a positive electrode reaction but it cannot retain binding capacity between electrode active materials and adhesion between the electrode active material layer and the collector so that the electrode active material layer is separated from the collector in a high-temperature environment. An electrochemical device manufactured by using the binder of the above WO02/039518 has a problem that it readily self-discharges in a high-temperature environment and its bad effect on the environment is apprehended as it contains an organic solvent as a liquid medium which meets the above requirements. Further, it has a safety problem when it is handled by a worker.

### DISCLOSURE OF THE INVENTION

The present invention has been made under the above situation.
It is therefore an object of the present invention to provide a novel binder for electrochemical device electrodes (binder composition for electrodes). An electrochemical device obtained from the binder composition for electrodes can retain binding capacity and adhesion even in a high-temperature environment, and its self-discharge in a high-temperature environment is highly suppressed. Further, the binder composition for electrodes has little adverse effect on the environment and high safety at the time of handling.
The inventors of the present invention conducted intensive studies to achieve the above object and found that

there is a close relationship among the above performance and the composition and the molecular orbital level of a polymer contained in the binder. The present invention was accomplished based on this finding.

That is, the above object and advantage of the present invention are attained by a binder composition for electrodes which contains a polymer and an aqueous medium, wherein the polymer consists of a polymer (A) having a HOMO (Highest Occupied Molecular Orbital) value calculated by a semiempirical molecular orbital method of -10 eV or less, a difference between its LUMO (Lowest Unoccupied Molecular Orbital) value calculated by the semiempirical molecular orbital method and its HOMO value of 10.5 eV or more, and a fluorine atom content measured by combustion ion chromatography of 2 to 30 mass%.

BEST MODE FOR CARRYING OUT THE INVENTION

The mode for carrying out the invention will be described hereinunder.

The present invention is not limited to the following mode. That is, it should be understood that a mode in which changes or modifications have been made on the following embodiment based on the common knowledge of a person skilled in the art without departing from the spirit and scope of the invention belongs to the scope of the invention.

<binder composition for electrodes>

A detailed description is subsequently given of the binder composition for electrodes of the present invention.

The binder composition for electrodes of the present invention contains a polymer and an aqueous medium and may contain a thickener as required and further an emulsifier, a polymerization initiator or the residue thereof, a surfactant and a neutralizer.

[polymer]

The polymer contained in the binder composition for electrodes of the present invention consists of a polymer (A) which has a HOMO value calculated by a semiempirical molecular orbital method of -10 eV or less, a difference between its LUMO value calculated by the semiempirical molecular orbital method and its HOMO value of 10.5 eV or more, and a fluorine atom content measured by combustion ion chromatography of 2 to 30 mass%. The polymer may consist of one polymer or a mixture of a plurality of polymers which differ in at least one of composition, composition distribution, molecular weight, molecular weight distribution and steric structure. When the polymer consists of a mixture of a plurality of polymers, it is preferably a polymer (A) all the components of which meet the above requirements or a polymer (A) which is a polymer mixture meeting the above requirements as a whole. Preferably, the polymer contained in the binder composition for electrodes of the present invention does not contain a polymer except for the polymer (A) in the above sense.

In the present invention, the HOMO value of the polymer (A) is -10 eV or less. The HOMO value of the polymer (A) is preferably -12 to -10 eV, more preferably -11.5 to -10.5 eV. The HOMO value is an index for judging the oxidation resistance of a compound. That is, a compound having a low HOMO value is hardly deprived of its electrons and therefore hardly oxidized. However, it is known that a compound having an extremely low HOMO value is mechanically fragile. When the HOMO value of the polymer (A) falls within the above range, the polymer (A) becomes excellent in balance between oxidation resistance and flexibility, whereby the polymer (A) withstands the oxidation reaction of a positive electrode and can provide an electrode having sufficiently high flexibility advantageously.

Further, the difference between the LUMO value and the HOMO value of the polymer (A) is 10.5 eV or more. This is a requirement that secures a sufficiently high LUMO value for the polymer (A). A compound having a high LUMO value hardly provides an electron and is therefore hardly reduced. When the polymer (A) has a high LUMO value, it can provide an electrode which can withstand the reduction reaction of a negative electrode advantageously. The difference between the LUMO value and the HOMO value of the polymer (A) is preferably 11.0 to 11.8 eV, more preferably 11.2 to 11.7 eV. The LUMO value of the polymer (A) is preferably -1.0 to 4.0 eV, more preferably -0.5 to 3.5 eV.

The above HOMO value and the above LUMO value are both calculated by the semiempirical molecular orbital method. Stated more specifically, they are values calculated by an AM1 method (refer to M.J.S. Dewar et al., Journal of American Chemical Society vol. 107, p. 3902 (1985)) and can be calculated by using the MOPAC93 commercially available computer program (manufactured by Fujitsu Limited).

The polymer (A) has a fluorine atom content measured by combustion ion chromatography of 2 to 30 mass%. That is, the ratio of the total mass of the fluorine atom to the total mass of the polymer (A) is 2 to 30 mass%. When the fluorine atom content falls within the above range, adhesion between the electrode active material layer and the collector in a high-temperature environment can be ensured while the oxidation resistance of the polymer (A) is retained. The fluorine atom content of the polymer (A) is preferably 3 to 28 mass%, more preferably 5 to 25 mass%.

The above fluorine atom content is a value measured by combustion ion chromatography. That is, a specimen

prepared by drying the polymer (A), cleaning it with distilled water and drying it again can be measured by combustion ion chromatography.

The polymer (A) having a HOMO value, a difference between its LUMO value and its HOMO value and a fluorine atom content within the above ranges can withstand the oxidation reaction of a positive electrode and also the reduction reaction of a negative electrode and has high flexibility. Therefore, the binder composition for electrodes of the present invention which contains this polymer (A) as a polymer can be advantageously used for a positive electrode and a negative electrode of electrochemical devices. This material having such general applicability has been unknown until now.

The weight average molecular weight of the polymer (A) is preferably 30,000 to 2,000,000, more preferably 50,000 to 1,500,000, particularly preferably 100,000 to 1,000,000. When the weight average molecular weight of the polymer (A) falls within the above range, adhesion between the collector and the electrode active material layer becomes high in both of a normal-temperature environment and a high-temperature environment. The term "weight average molecular weight" as used herein means a value measured in terms of polystyrene as a standard material by gel permeation chromatography.

The glass transition point (Tg) of the polymer (A) is preferably -60 to 60°C, more preferably -50 to 50°C, particularly preferably -40 to 40°C. When the above Tg falls within the above range, the flexibility of the polymer (A) becomes appropriate and an electrode active material layer which rarely causes the contamination of a roll at the time of pressing can be obtained. The term "glass transition point (Tg)" as used herein means a value measured by a differential scanning calorimeter.

The polymer (A) having the above-mentioned characteristic properties can be synthesized preferably by radically polymerizing a mixture of raw material monomers. At this point, by suitably setting the types and the contents of the monomers to be polymerized, the HOMO value, the difference between the LUMO value and the HOMO value and the fluorine atom content of the obtained polymer (A) can be controlled.

The monomers used to synthesize the polymer (A) are, for example, (a1) a monomer having a fluorine atom, (a2) a monomer having a cyano group, (a3) an alkyl ester monomer of (meth)acrylic acid, (a4) an unsaturated carboxylic acid monomer, (a5) at least one monomer selected from a conjugated diene and an aromatic vinyl compound and (a6) another monomer. The term " (meth) acrylic acid" includes both acrylic acid and methacrylic acid. A similar term "(meth) acrylonitrile" should be understood likewise.

When the polymer (A) is to be synthesized, the HOMO value of the obtained polymer (A) can be made low by increasing the contents of the monomer (a1), the monomer (a2) and the monomer (a4) in the monomer mixture to be used in the polymerization reaction. Further, the difference between the LUMO value and the HOMO value of the obtained polymer (A) can be made large by increasing the contents of the monomer (a1) and the monomer (a3) in the monomer mixture. Since the difference between the LUMO value and the HOMO value becomes small when the monomer (a5) is used, it is preferred to reduce the content of this monomer. The content of the fluorine atom in the obtained polymer (A) is unambiguously determined by the content of the monomer (a1) in the monomer mixture. A person having ordinary skill in the art can easily know specific values of these parameters, i.e., the HOMO value and the difference between the LUMO value and the HOMO value by semiempirical molecular orbital calculations and the content of the fluorine atom by simple desk calculations.

Examples of the above monomer having a fluorine atom (a1) used to synthesize the polymer (A) include olefin compounds having a fluorine atom and (meth)acrylic acid esters having a fluorine atom. The olefin compounds having a fluorine atom include vinylidene fluoride, tetrafluoroethylene, hexafluoropropene, chlorotrifluoroethylene and perfluoroalkyl vinyl ethers. The (meth) acrylic acid esters having a fluorine atom include compounds represented by the following general formula (1) and 3[4[1-trifluoromethyl-2,2-bis[bis(trifluoromethyl)fluoro methyl]ethynyloxy]benzooxy]2-hydroxypropyl.

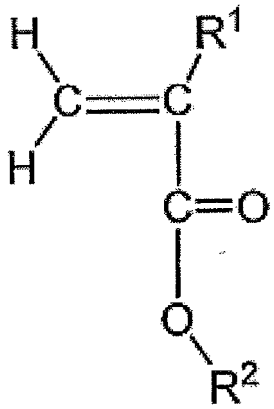

(1)

(In the above general formula (1), $R^1$ is a hydrogen atom or methyl group, and $R^2$ is a hydrocarbon group having 1 to 18 carbon atoms and containing a fluorine atom.)

$R^2$ in the above general formula (1) is, for example, an alkyl fluoride group having 1 to 12 carbon atoms, an aryl fluoride group having 6 to 16 carbon atoms or an aralkyl fluoride group having 7 to 18 carbon atoms, out of which the alkyl fluoride group having 1 to 12 carbon atoms is preferred. Preferred examples of $R^2$ in the above general formula (1) include 2,2,2-trifluoroethyl group, 2,2,3,3,3-pentafluoropropyl group, β-(perfluorooctyl)ethyl group, 2,2,3,3-tetrafluoropropyl group, 2,2,3,4,4,4-hexafluorobutyl group, 1H,1H,5H-octafluoropentyl group, 1H,1H,9H-perfluoro-1-nonyl group, 1H,1H,11H-perfluoroundecyl group and perfluorooctyl group. The monomer (a1) is preferably an olefin compound having a fluorine atom, more preferably at least one selected from the group consisting of vinylidene fluoride and hexafluoropropene.

The above monomers (a1) may be used alone or in combination of two or more.

The above monomer having a cyano group (a2) is, for example, an unsaturated carboxylic acid nitrile or a cyanoalkyl ester of an unsaturated carboxylic acid. Specific examples of the unsaturated carboxylic acid nitrile include (meth)acrylonitrile, α-chloroacrylonitrile and vinylidene cyanide; and examples of the cyanoalkyl ester of an unsaturated carboxylic acid include 2-cyanoethyl (meth)acrylate, 2-cyanopropyl (meth)acrylate and 3-cyanopropyl (meth)acrylate. At least one selected from these may be used. Out of these, unsaturated carboxylic acid nitriles are preferred and (meth) acrylonitrile is particularly preferred.

The above alkyl ester monomer of (meth)acrylic acid (a3) preferably has an alkyl group having 1 to 12 carbon atoms. Examples thereof include methyl (meth)acrylate, ethyl (meth)acrylate, n-propyl (meth)acrylate, i-propyl (meth) acrylate, n-butyl (meth)acrylate, i-butyl (meth)acrylate, n-amyl (meth)acrylate, i-amyl (meth)acrylate, n-hexyl (meth) acrylate, 2-ethylhexyl (meth)acrylate, n-octyl (meth)acrylate, i-nonyl (meth)acrylate and n-decyl (meth)acrylate. At least one selected from these may be used. At least one selected from methyl (meth)acrylate, n-butyl (meth)acrylate and 2-ethylhexyl (meth) acrylate out of these is preferably used.

The above unsaturated carboxylic acid monomer (a4) is selected from (meth) acrylic acid and itaconic acid. At least one selected from these may be used.

Examples of the conjugated diene out of the above monomers (a5) include 1,3-butadiene, 2-methyl-1,3-butadiene (isoprene), 2,3-dimethyl-1,3-butadiene and 2-chloro-1,3-butadiene (chloroprene); and examples of the aromatic vinyl compound include styrene, α-methylstyrene, p-methylstyrene, vinyltoluene, chlorostyrene and divinylbenzene. At least one selected from these may be used.

Examples of the above other monomer (a6) include alkylamides of an ethylenically unsaturated carboxylic acid and derivatives thereof such as (meth)acrylamide and N-methylolacrylamide; carboxylic acid vinyl esters such as vinyl acetate and vinyl propionate; acid anhydrides of an unsaturated dicarboxylic acid; monoalkyl esters of an unsaturated dicarboxylic acid; monoamides of an unsaturated dicarboxylic acid; and aminoalkylamides of an unsaturated carboxylic acid such as aminoethyl acrylamide, dimethylaminomethyl methacrylamide and methylaminopropyl methacrylamide. At least one selected from these may be used.

The copolymerization ratio of these monomers used to synthesize the polymer (A) is preferably set as follows. The following advantageous effects (1) to (3) are obtained by setting this copolymerization ratio.

(1) The HOMO value, the difference between the LUMO value and the HOMO value and the fluorine atom content of the obtained polymer (A) can be set to the above preferred ranges.
(2) Since the obtained polymer (A) is excellent in durability in a high-temperature environment, it provides an electrode which hardly peels and self-discharges even in a high-temperature environment.
(3) Since the affinity for an electrolytic solution of the obtained polymer (A) becomes suitable, the polymer (A)

provides an electrode having little internal resistance.

Monomer (a1): preferably 1 to 60 mass%, more preferably 3 to 40 mass%, particularly preferably 10 to 30 mass%
Monomer (a2): preferably 3 to 50 mass%, more preferably 15 to 45 mass%
Monomer (a3): preferably 20 to 75 mass%, more preferably 30 to 70 mass%, particularly preferably 40 to 60 mass%
Monomer (a4): preferably 1 to 10 mass%, more preferably 2 to 7 mass%
Monomer (a5): preferably not more than 5 mass%, more preferably not more than 3 mass%, particularly preferably not used
Monomer (a6): preferably not more than 10 mass%, more preferably not more than 5 mass%, particularly preferably not used

The polymer (A) can be easily produced by emulsion polymerizing a mixture of the above monomers (a1) to (a6) in accordance with a known method.

As the polymer (A) contained in the binder composition for electrodes of the present invention, a polymer obtained by polymerizing a mixture of the above monomers (a1) to (a6) in a single stage may be used as it is. However, it is preferred that the polymer (A) should be a polymer obtained by polymerizing a monomer mixture containing at least a monomer having a cyano group (a2) and an alkyl ester monomer of (meth) acrylic acid (a3) in the presence of a polymer (A1) containing a fluorine atom obtained by polymerizing the monomer (a1) because the adhesion and binding capacity of an electrode active material layer and the excellent high-temperature characteristic properties of an electrochemical device can be obtained at the same time.

The content of a recurring unit derived from the monomer (a1) in the above polymer (A1) is preferably not less than 80 mass%, more preferably not less than 90 mass%, much more preferably not less than 95 mass% and may be 100 mass% based on the total mass of the polymer (A1).

At the time of the polymerization of the monomer (a2) and the monomer (a3) in the presence of the polymer (A1), the monomers (a4) to (a6) may be coexistent. In this case, the copolymerization ratio of the monomers is preferably set as follows based on 100 mass% of the total of the monomers (a2) to (a6).
Monomer (a2): preferably 4 to 65 mass%, more preferably 20 to 55 mass%
Monomer (a3) : preferably 25 to 90 mass%, more preferably 35 to 85 mass%, particularly preferably 40 to 60 mass%
Monomer (a4): preferably 1.2 to 12 mass%, more preferably 3 to 9 mass%
Monomer (a5): preferably not more than 6 mass%, more preferably not more than 3.5 mass%, particularly preferably not used
Monomer (a6): preferably not more than 12 mass%, more preferably not more than 6 mass%, particularly preferably not used

The amount of the polymer (A1) at the time of polymerizing the monomers (a2) to (a6) is preferably 3 to 60 mass%, more preferably 7.5 to 40 mass%, particularly preferably 10 to 30 mass% based on the total of the polymer (A1) and the monomers (a2) to (a6).

The production of the polymer in the present invention, that is, single-stage polymerization for the synthesis of the polymer A, the polymerization of the polymer A1 and the polymerization of a monomer mixture containing at least a monomer having a cyano group (a2) and an alkyl ester monomer of (meth)acrylic acid (a3) in the presence of the polymer A1 may be carried out in the presence of a known polymerization initiator, a molecular weight control agent and an emulsifier (surfactant).

Examples of the above polymerization initiator include water-soluble polymerization initiators such as sodium persulfate, potassium persulfate and ammonium persulfate; oil-soluble polymerization initiators such as benzoyl peroxide, lauryl peroxide and 2,2'-azobisisobutyronitrile; and redox polymerization initiators containing a reducing agent such as sodium bisulfite. These polymerization initiators may be used alone or in combination of two or more.

The amount of the polymerization initiator is preferably 0.3 to 3 parts by mass based on 100 parts by mass of the total of the monomers in use (the total of the monomers (a1) to (a6) when the polymer A is synthesized by single-stage polymerization, or the total of the monomers (a2) to (a6) when a monomer mixture containing at least a monomer having a cyano group (a2) and an alkyl ester monomer of (meth) acrylic acid (a3) is polymerized in the presence of the polymer (A1), the same shall apply hereinafter).

Examples of the above molecular weight control agent include halogenated hydrocarbons such as chloroform and carbon tetrachloride; mercaptan compounds such as n-hexylmercaptan, n-octylmercaptan, n-dodecylmercaptan, t-dodecylmercaptan and thioglycolic acid; xanthogen compounds such as dimethylxathogen disulfide and diisopropylxanthogen disulfide; and others such as terpinolene and $\alpha$-methylstyrene dimer. These molecular weight control agents may be used alone or in combination of two or more.

The amount of the molecular weight control agent is preferably not more than 5 parts by mass based on 100 parts by mass of the total of all the monomers in use.

The above emulsifier is selected from an anionic surfactant, a nonionic surfactant, an amphoteric surfactant and a fluorine-based surfactant, and a reactive emulsifier may be used.

Examples of the above anionic surfactant include sulfuric acid esters of a higher alcohol, alkylbenzene sulfonates, aliphatic sulfonates and sulfonic acid esters of a polyethylene glycol alkyl ether; and examples of the above nonionic surfactant include alkyl esters of polyethylene glycol, alkyl ethers of polyethylene glycol and alkylphenyl ethers of polyethylene glycol.

The above amphoteric surfactant has an anionic moiety composed of a carboxylic acid salt, a sulfuric acid ester salt, a sulfonic acid salt, or a phosphoric acid ester salt, and a cationic moiety composed of an amine salt or a quaternary ammonium salt. Examples of the amphoteric surfactant include betaine compounds such as laurylbetaine and stearylbetaine; and amino acid type surfactants such as lauryl-β-alanine, lauryl di(aminoethyl)glycine and octyl di(aminoethyl) glycine.

Examples of the above fluorine-based surfactant include fluorobutylsulfonic acid salts, phosphoric acid esters having a fluoroalkyl group, carboxylic acid salts having a fluoroalkyl group, and fluoroalkylethylene oxide adducts. Commercially available products of the fluorine-based surfactant include F Top EF301, EF303 and EF352 (of Tokem Products Co., Ltd.), Megafac F171, F172 and F173 (of DIC Corporation); Florade FC430 and FC431 (of Sumitomo 3M Limited); Asahi Guard AG710, Surflon S-381, S-382, SC101, SC102, SC103, SC104, SC105 and SC106,and Surfynol E1004, KH-10, KH-20, KH-30 and KH-40 (of Asahi Glass Co., Ltd.), and Futargent 250, 251, 222F and FTX-218 (of Neos Corporation).

Examples of the above reactive emulsifier include emulsifiers having at least one polymerizable unsaturated double bond in the molecule. Out of these emulsifiers, anionic and nonionic emulsifiers are preferred, and at least one selected from these may be used.

The reactive emulsifier is particularly preferably a compound having at least one hydrophobic group, at least one hydrophilic group and at least one reactive group in the molecule. Examples of the above hydrophobic group include aliphatic hydrocarbon groups and aromatic hydrocarbon groups. Examples of the above hydrophilic group include hydroxyl group, nonionic groups and anionic groups. The nonionic groups include a polyoxyalkylene ether group, and the anionic groups include sulfates, sulfonates, carboxylates and phosphates. Examples of the above reactive group include vinyl ether groups, allyl ether groups, vinylphenyl groups, allylphenyl groups, (meth)acrylate groups, (meth)acrylamide groups, unsaturated dibasic acid ester groups and unsaturated dibasic acid amide groups. Examples of the unsaturated dibasic acid include maleic acid.

Emulsifiers disclosed by JP-A 2006-140081 may be preferably used as the reactive emulsifier.

Specific examples of the reactive emulsifier include hydroxyl compounds such as 1-(meth)aryloxy-2-hydroxypropane, (meth)acryloyloxy-2-hydroxypropane and (meth)acryloxycarbonylmethyl-3-alkoxy(polyoxyalkylenoxy) -2-hydroxypropane; sulfuric acid esters, sulfonic acid esters and phosphoric acid esters of the above hydroxyl compounds, and salts thereof; alkylene oxide adducts of the above hydroxyl compounds; sulfuric acid esters, sulfonic acid esters and phosphoric acid esters of the alkylene oxide adducts of the above hydroxyl compounds, and salts thereof; alkylene oxide adducts of a vinyl compound or an allylphenol compound; sulfuric acid esters, sulfonic acid esters and phosphoric acid esters of alkylene oxide adducts of the above vinyl compound or allylphenol compound, and salts thereof; and monoallyl-monoalkyl esters of sulfosuccinic acid and mono(3-aryloxy-2-hydroxypropyl)-monoalkyl esters of sulfosuccinic acid, and salts thereof.

Commercially available products of these reactive emulsifiers include Adeca Reasoap NE, Adeca Reasoap SE, Adeca Reasoap ER, Adeca Reasoap SR, Adeca Reasoap PP and Adeca Reasoap PPE (trade name of ADEKA CORPORATION); Aquaron KH, Aquaron HS, Aquaron BC, Aquaron RN and New Frontier (trade name of Daiichi Kogyo Seiyaku Co., Ltd.); Eleminol ES, Eleminol JS, Eleminol RS, Eleminol MON and Eleminol HA (trade name of Sanyo Chemical Industries, Ltd.); and Latemul (trade name of Kao Corporation).

At least one selected from the above surfactants and the reactive emulsifiers may be used as the emulsifier.

The amount of the emulsifier is preferably 0.1 to 10 parts by mass, more preferably 0.5 to 5 parts by mass based on 100 parts by mass of the total of all the monomers in use.

Emulsion polymerization is preferably carried out in a suitable aqueous medium, particularly preferably in water. The total amount of all the monomers contained in the aqueous medium may be 10 to 50 mass%, preferably 20 to 40 mass%.

Emulsion polymerization is carried out preferably at a temperature of 40 to 85°C for 2 to 24 hours, more preferably at a temperature of 50 to 80°C for 3 to 20 hours.

The particularly preferred production method of the polymer A is as follows. That is, an emulsified liquid of a mixture of monomers (a2) to (a6) (to be referred to as "monomer emulsified liquid" hereinafter) is added to an aqueous medium containing at least the polymer A1 and a polymerization initiator to start emulsion polymerization, and polymerization is further continued as required after the monomer emulsified liquid is added.

When the aqueous medium containing at least the polymer A1 and a polymerization initiator is to be prepared, it is preferred that the polymerization initiator should be added to the aqueous medium containing the polymer A1 after it is heated to a certain degree (after its temperature becomes 40 to 70 °C) and that the addition of the monomer emulsified liquid should be started in a time not too long after the addition of the polymerization initiator in order to avoid the

decomposition of the polymerization initiator in a temperature elevation step.

The aqueous medium containing the polymer A1 and the polymerization initiator may further contain optional components such as the above-mentioned molecular weight control agent. The monomer emulsified liquid can be prepared by injecting monomers and an emulsifier and optionally other components into the aqueous medium and stirring them fully. The emulsifier used herein is preferably a reactive emulsifier which has been described above. When the reactive emulsifier is used in the polymerization of the monomers (a2) to (a6), the emulsifier is chemically bonded to the polymer to be bound thereto. As a result, in the obtained electrochemical device, it is possible to prevent the emulsifier remaining in the polymer from eluting into an electrolyte, thereby making it possible to suppress the deterioration of electric properties by the repeated charge and discharge of the electrochemical device. The total content of the monomers in the emulsified liquid is preferably 40 to 80 mass%, more preferably 50 to 70 mass%. The content of the emulsifier in the emulsified liquid is preferably 0.1 to 10 parts by mass, more preferably 0.5 to 5 parts by mass based on 100 parts by mass of the total of all the monomers in use.

The addition of the monomer emulsified liquid to the aqueous medium containing the polymerization initiator is preferably carried out slowly in order to prevent the occurrence of an inhomogeneous polymerization reaction due to the eccentric location of the polymerization initiator in the reaction solution. The addition time is preferably 0.5 to 6 hours, more preferably 1 to 4 hours.

After the end of the addition of the monomer emulsified liquid, preferably, the polymerization is further continued. In this case, the temperature of the continued polymerization is preferably 40 to 85°C, more preferably 60 to 80°C. The time of the continued polymerization is preferably 0.5 to 6 hours, more preferably 1 to 4 hours. The total polymerization time from the start of the addition of the monomer emulsified liquid is preferably 1 to 12 hours, more preferably 3 to 8 hours. To continue the polymerization, the polymerization initiator may be added as required in an amount of the same degree with that added at the start of the polymerization.

Thus, the polymer A can be synthesized.

The polymer contained in the binder composition for electrodes of the present invention consists of the above polymer A and does not contain another polymer.

[aqueous medium]

The binder composition for electrodes of the present invention further contains an aqueous medium.

The above aqueous medium contains water. The aqueous medium may contain a small amount of a nonaqueous medium besides water. Examples of the nonaqueous medium include amide compounds, hydrocarbons, alcohols, ketones, esters, amine compounds, lactones, sufoxides and sulfone compounds. At least one selected from these may be used. The content of the nonaqueous medium is preferably not more than 10 mass%, more preferably not more than 5 mass% based on the total of the whole aqueous medium. Most preferably, the aqueous medium consists of water and does not contain a nonaqueous medium.

When the binder composition for electrodes of the present invention contains an aqueous medium as a medium and preferably does not contain a nonaqueous medium except for water, it has a small adverse effect on the environment and high safety for people handling it. A composition containing an organic solvent as a medium has a problem that lots of time and cost are needed for its disposal and disadvantages that a firesafe storage facility is necessary due to its characteristic properties such as combustibility and that special skill and attention are required to handle it.

[thickener]

The binder composition for electrodes of the present invention may contain a thickener to further improve its coatability and the charge and discharge characteristics of the obtained electrochemical device.

Examples of the thickener include cellulose derivatives such as carboxymethyl cellulose, methyl cellulose and hydroxypropyl cellulose; and polyacrylic acid salts such as sodium polyacrylate; polyvinyl alcohols, polyethylene oxide, polyvinyl pyrrolidone, (meth)acrylic acid-vinyl alcohol copolymers, maleic acid-vinyl alcohol copolymers, modified polyvinyl alcohols, polyethylene glycol, ethylene-vinyl alcohol copolymers and polyvinyl acetate partially saponified products.

The content of the thickener in the binder composition for electrodes of the present invention is preferably not more than 20 mass%, more preferably 0.1 to 10 mass% based on the total solids content (total mass of components except for a liquid medium in the composition) of the binder composition for electrodes.

[binder composition for electrodes]

The binder composition for electrodes of the present invention is existent as slurry or latex containing the above polymer dispersed in the above aqueous medium.

The polymer is preferably granular in the aqueous medium. The hydrodynamic diameter (Rh) of the polymer

in the aqueous medium is preferably 70 to 500 nm, more preferably 75 to 450 nm, particularly preferably 80 to 400 nm. When the hydrodynamic diameter of the polymer falls within the above range, the stability of the composition itself is improved and also binding capacity between electrode active materials and adhesion between the collector and the electrode active material layer in the obtained electrode are further improved. This hydrodynamic diameter is a number average particle diameter measured by a dynamic light scattering method and can be obtained by using the ALV5000 tunable dynamic light scattering measuring instrument of ALV-GmbH.

The binder composition for electrodes of the present invention is preferably latex containing the guranular polymer dispersed in the aqueous medium. As the binder composition for electrodes of the present invention, a polymerization reaction mixture obtained after the above polymer A is synthesized (polymerized) in the aqueous medium is particularly preferably used directly after its liquid property is adjusted as required. Therefore, the binder composition for electrodes of the present invention may contain other components such as an emulsifier, a polymerization initiator or its residue, a surfactant and a neutralizer besides the polymer, the aqueous medium and the optionally used thickener. The total content of these other components is preferably not more than 3 mass%, more preferably not more than 2 mass% based on the total solids content of the composition.

The solids content (the ratio of the total mass of components except for the liquid medium in the composition to the total mass of the composition) of the binder composition for electrodes is preferably 20 to 60 mass%, more preferably 25 to 50 mass%.

The liquid property of the binder composition for electrodes is preferably around neutral, more preferably at a pH of 6.0 to 8.5, particularly preferably at a pH of 7.0 to 8.0. To adjust the liquid property of the composition, a known water-soluble acid or base may be used. Examples of the acid include hydrochloric acid, nitric acid, sulfuric acid and phosphoric acid; and examples of the base include sodium hydroxide, potassium hydroxide, lithium hydroxide and ammonia water.

The above binder composition for electrodes of the present invention can be advantageously used as an electrode material for electrochemical devices such as lithium ion secondary batteries, electrical double-layer capacitors and lithium ion capacitors. Since the advantageous effect of the present invention is maximized when the binder composition for electrodes is used as a material for the positive electrode of a lithium ion secondary battery, this application use is particularly preferred.

<slurry for electrodes>

The slurry for electrodes in the present invention contains an electrode active material and the above binder composition for electrodes of the present invention. The slurry for electrodes of the present invention may contain other components as required besides the electrode active material and the binder composition for electrodes of the present invention.

[electrode active material]

The electrode active material is suitably selected according to the type of an electrochemical device of interest.

When the binder composition for electrodes of the present invention is used in the slurry for electrodes to form the positive electrode (slurry for positive electrodes) of a lithium ion secondary battery, lithium cobaltate, lithium nickelate, lithium manganate, iron lithium phosphate or ternary nickel cobalt lithium manganate may be preferably used as the electrode active material (positive electrode active material).

When the binder composition for electrodes of the present invention is used in the slurry for electrodes to form the negative electrode (slurry for negative electrodes) of a lithium ion secondary battery, a carbon material or carbon may be preferably used as the electrode active material (negative electrode active material). Examples of the carbon material include carbon materials obtained by sintering an organic polymer compound, coke or pitch. Examples of the organic polymer compound which is the precursor of the carbon material include phenol resin, polyacrylonitrile and cellulose. Examples of the above carbon include artificial graphite and natural graphite.

When the binder composition for electrodes of the present invention is used in the slurry for electrodes to form an electrode for electrical double-layer capacitors, graphite, non-graphitized carbon or hard carbon; a carbon material obtained by sintering coke or pitch; or a polyacene-based organic semiconductor (PAS) may be used as the electrode active material.

[other components]

The slurry for electrodes of the present invention may further contain a thickener, a dispersant, a surfactant and a defoaming agent as required.

Examples of the above thickener are the same as those enumerated for the above thickener which may be

optionally contained in the binder composition for electrodes of the present invention; examples of the above dispersant include sodium hexamethaphosphate, sodium tripolyphosphate and sodium polyacrylate; and examples of the above surfactant include nonionic surfactants and anionic surfactants which are stabilizers for latex.

The total content of the above other components is preferably not more than 10 mass%, more preferably 0.5 to 5 mass% based on the total solids content (the total mass of components except for the liquid medium contained in the composition) of the slurry for electrodes of the present invention.

[preferred mode of slurry for electrodes]

The slurry for electrodes contains the binder composition for electrodes in an amount of preferably 0.1 to 10 parts by mass, more preferably 0.3 to 4 parts by mass in terms of solids content based on 100 parts by mass of the electrode active material. When the content of the binder composition for electrodes is 0.1 to 10 parts by mass in terms of solids content, the polymer is hardly dissolved in an electrolytic solution for use in an electrochemical device, thereby making it possible to suppress an adverse effect on the characteristic properties of the device by a rise in overvoltage at a high temperature.

The slurry for electrodes is prepared by mixing together the binder composition for electrodes of the present invention, the above electrode active material and optionally used other components. Examples of the means of mixing them together include known mixing machines such as a stirring machine, a defoaming machine, a bead mill and a high-pressure homogenizer.

The preparation of the slurry for electrodes is preferably carried out under reduced pressure, thereby making it possible to prevent the formation of air bubbles in the obtained electrode active material layer.

The above slurry for electrodes can provide an electrode active material layer having high adhesion between the electrode active materials and high adhesion between the electrode active material and the collector and also an electrochemical device having excellent electrochemical stability in a high-temperature environment when it contains the binder composition for electrodes of the present invention.

<electrode>

The electrode in the present invention comprises a collector and an electrode active material layer formed through the steps of applying the above-mentioned slurry for electrodes to the surface of the collector and drying it. After the drying of the coating film, the film is preferably pressed.

[collector]

A metal foil, an etched metal foil or an expanded metal may be used as the collector. Examples of these materials include metals such as aluminum, copper, nickel, tantalum, stainless steel and titanium from which a suitable one is selected according to the type of an electrochemical device of interest.

To form, for example, a positive electrode for lithium ion secondary batteries, aluminum is preferably used out of the above materials as the collector. In this case, the thickness of the collector is preferably 5 to 30 $\mu$m, more preferably 8 to 25 $\mu$m.

Meanwhile, to form a negative electrode for lithium ion secondary batteries, copper is preferably used out of the above materials as the collector. In this case, the thickness of the collector is preferably 5 to 30 $\mu$m, more preferably 8 to 25 $\mu$m.

Further, to form an electrode for electrical double-layer capacitors, aluminum or copper is preferably used out of the above materials as the collector. In this case, the thickness of the collector is preferably 5 to 100 $\mu$m, more preferably 10 to 70 $\mu$m, particularly preferably 15 to 30 $\mu$m.

[formation of electrode active material layer]

The electrode active material layer in the electrode is formed through the steps of applying the slurry for electrodes to the surface of the above collector and drying it.

Examples of the means of applying the slurry for electrodes to the collector include suitable techniques such as doctor blade coating, reverse roll coating, comma bar coating, gravure coating and air knife coating.

The coating film is dried at a temperature of preferably 20 to 250°C, more preferably 50 to 150°C for preferably 1 to 120 minutes, more preferably 5 to 60 minutes.

The coating film after drying is preferably pressed. Examples of the means of pressing include a roll press, a high-pressure super press, a soft calender and a 1-ton press. Pressing conditions are suitably set according to the type of the machine in use and the desired thickness and density of the electrode active material layer.

The preferred thickness and density of the electrode active material layer differ according to its application purpose.

In the case of a negative electrode for lithium ion secondary batteries, preferably, the electrode active material layer has a thickness of 40 to 100 $\mu$m and a density of 1.3 to 1.9 g/$cm^3$.

In the case of a positive electrode for lithium ion secondary batteries, preferably, the electrode active material layer has a thickness of 40 to 100 $\mu$m and a density of 2.0 to 5.0 g/$cm^3$.

In the case of an electrode for electrical double-layer capacitors, preferably, the electrode active material layer has a thickness of 50 to 200 $\mu$m and a density of 0.9 to 1.8 g/$cm^3$.

<electrochemical device>

The electrochemical device in the present invention comprises the above electrode.

The electrochemical device in the present invention has a structure that the above electrode is opposed to an opposite electrode through an electrolytic solution, preferably, separated by the existence of a separator.

To manufacture this electrochemical device, for example, two electrodes (a positive electrode and a negative electrode, or two electrodes for capacitors) are placed one upon the other through a separator, the obtained assembly is rolled or bent according to the shape of a battery to be put into a battery container, an electrolytic solution is injected into the battery container, and the battery container is sealed up. The battery may have a suitable shape such as a coin-like, button-like, sheet-like, cylindrical, square or flat shape.

The above electrolytic solution is suitably selected according to the type of an electrochemical device of interest. A solution prepared by dissolving a suitable electrolyte in a solvent is used as the electrolytic solution.

To manufacture a lithium ion secondary battery, a lithium compound is used as the electrolyte. Examples of the lithium compound include $LiClO_4$, $LiBF_4$, LiI, $LiPF_6$, $LiCF_3SO_3$, $LiAsF_6$, $LiSbF_6$, $LiAlCl_4$, LiCl, LiBr, $LiB(C_2H_5)_4$, $LiCH_3SO_3$, $LiC_4F_9SO_3$ and $Li(CF_3SO_2)_2N$. In this case, the concentration of the electrolyte is preferably 0.5 to 3.0 mols/L, more preferably 0.7 to 2.0 mols/L.

To manufacture an electrical double-layer capacitor, tetraethylammonium tetrafluoroborate, triethylmethylammonium tetrafluoroborate or tetraethylammonium hexafluorophosphate is used as the electrolyte. In this case, the concentration of the electrolyte is preferably 0.5 to 3.0 mols/L, more preferably 0.7 to 2.0 mols/L.

To manufacture a lithium ion capacitor, the type and the concentration of the electrolyte are the same as in the lithium ion secondary battery.

In either one of the above cases, examples of the solvent used in the electrolytic solution include carbonates such as propylene carbonate, ethylene carbonate, butylene carbonate, dimethyl carbonate, diethyl carbonate and methylethyl carbonate; lactones such as $\gamma$-butyrolactone; ethers such as trimethoxysilane, 1,2-dimethoxyethane, diethyl ether, 2-ethoxyethane, tetrahydrofuran and 2-methyl tetrahydrofuran; sulfoxides such as dimethyl sulfoxide; oxorane derivatives such as 1,3-dioxorane and 4-methyl-1,3-dioxorane; nitrogen-containing compounds such as acetonitrile and nitromethane; esters such as methyl formate, methyl acetate, butyl acetate, methyl propionate, ethyl propionate and triester phosphate; glyme compounds such as diglyme, triglyme and tetraglyme; ketones such as acetone, diethyl ketone, methyl ethyl ketone and methyl isobutyl ketone; sulfone compounds such as sulfolane; oxazolidinone derivatives such as 2-methyl-2-oxazolidinone; and sultone compounds such as 1,3-propane sultone, 1,4-butane sultone, 2,4-butanesultone and 1,8-naphthasultone.

The above electrochemical device has high adhesion between electrode active materials in the electrode active material layer and high adhesion between the electrode active material and the collector and excellent electrochemical stability in a high-temperature environment. Therefore, this electrochemical device is suitable for use as a secondary battery or a capacitor to be mounted on vehicles such as electric cars, hybrid cars and trucks and also as a secondary battery or a capacitor for use in AV equipment, OA equipment and communication equipment.

Examples

The following examples are provided for the purpose of further illustrating the present invention but are in no way to be taken as limiting.

"Parts" and "%" in the following examples are based on mass unless otherwise noted.

Methods for measuring and evaluating various characteristic property values in all the examples and comparative examples are described below.

<characteristic property values of binder composition for electrodes>

(1) Hydrodynamic diameter

A measurement specimen prepared by diluting each binder composition for electrodes with water to about 1,000 times was used to measure its number average particle diameter as hydrodynamic diameter with the ALV5000 tunable dynamic light scattering measuring instrument of ALV-GmbH comprising a He-Ne laser ($\lambda$=632.8 nm) having an output of 22 mW as a light source.

(2) Content of fluorine atom

The obtained binder composition was dried, cleaned with distilled water and dried again to obtain a measurement specimen. The fluorine atom content of each specimen was measured by combustion ion chromatography using the AQF-100 automatic sampler for combustion of Mitsubishi Chemical Analytech Co., Ltd. and the ICS-1000 ion chromatograph of Dionex Corporation.

(3) HOMO value and LUMO value

The HOMO value and the LUMO value of each polymer were calculated by using the MOPAC93 computer program of Fujitsu Limited and the AM1 method (refer to M.J.S. Dewar et al., Journal of American Chemical Society, vol. 107, p. 3902 (1985)).

<characteristic property values of electrode>

(1) Adhesion (peel strength)

A test sample having a width of 2 cm and a length of 12 cm was cut out from each electrode (positive electrode, negative electrode or capacitor electrode, laminate before it was punched into a disk-like form). The electrode active material layer side of the test sample was bonded to an aluminum plate by a double-stick tape. Then, one end of the collector of the test sample was separated from the electrode active material layer, and Cellotape (registered trademark of Nichiban Co., Ltd.) which is a JIS Z1522-based 18 mm-wide tape was put on this.

The peel strength (mN/2 cm) of this electrode was measured 6 times by pulling up this tape at a rate of 50 mm/min and a peel angle of 90° while the angle between it and the aluminum plate was kept at 90° in order to calculate the average value of these data as the peel strength (mN/2 cm) of the electrode active material layer. "mN/2 cm" is the unit of peel strength based on a width of 2 cm.

As the peel strength value becomes larger, adhesive strength between the collector and the electrode active material layer becomes higher so that it can be evaluated that the electrode active material layer hardly peels off from the collector.

<synthesis of polymer (A1)>

Synthesis Example 1

After the inside of an autoclave having an inner capacity of about 6 liters and comprising an electromagnetic stirrer was fully substituted by nitrogen, 2.5 liters of deoxidized pure water and 25 g of ammonium perfluorodecanoate as an emulsifier were added to the autoclave and heated up to 60°C while they were stirred at 350 rpm. Then, a vinylidene fluoride gas (VDF) was supplied into the autoclave until the inner pressure of the autoclave reached 20 $kg/cm^2G$. Thereafter, 25 g of a Freon (chlorofluorocarbon) 113 solution containing 20 % of diisopropyl peroxydicarbonate as a polymerization initiator was pressure injected into the autoclave by using a nitrogen gas as a carrier gas to start polymerization. During polymerization, the VDF gas was supplied intermittently into the above autoclave to maintain the inside pressure at 20 $kg/cm^2G$. Since the polymerization speed slowed down along the proceeding of polymerization, 3 hours after the start of polymerization, the same amount (25 g) of the polymerization initiator solution as that injected before the start of polymerization was pressure injected by using a nitrogen gas as a carrier gas. Thereafter, the polymerization reaction was further continued for 3 hours to obtain a reaction solution. The obtained reaction solution was cooled, stirring was stopped, and unreacted monomers were released to terminate the reaction.

Latex containing 40 % of a polymer (PVdF) having a fluorine atom was obtained as described above.

<manufacture and evaluation (1) of lithium ion secondary battery, examples in which the binder composition for electrodes of the present invention is applied for a positive electrode for lithium ion secondary batteries>

Example P-1

[preparation of binder composition for electrodes]

After 150 parts of water as an aqueous medium and 20 parts in terms of solids content of the latex containing PVdF produced in the above Synthesis Example 1 were added to a separable flask having a capacity of 7 liters, the inside of the separable flask was fully substituted by nitrogen.

Meanwhile, 60 parts of water, 2 parts in terms of solids content of an ether sulfate type emulsifier (Adeca Reasoap SR1025 of ADEKA CORPORATION) as an emulsifier, and 20 parts of acrylonitrile (AN), 20 parts of methyl methacrylate (MMA), 10 parts of 2-ethylhexyl acrylate (2EHA), 25 parts of butyl acrylate (BA) and 5 parts of acrylic acid (AA) as monomers were added to another vessel and fully stirred to prepare a monomer emulsified liquid containing a mixture of the above monomers.

Thereafter, the inside of the above separable flask was heated, and 0.5 part of ammonium persulfate and 0.1 part of sodium sulfite as a polymerization initiator were added when the inside temperature of the separable flask reached 50°C. When the inside temperature of the separable flask reached 60°C, the addition of the monomer emulsified liquid prepared above was started so that the monomer emulsified liquid was gradually added over 2 hours while the inside temperature of the separable flask was kept at 60°C. Thereafter, a polymerization reaction was carried out by keeping this temperature for another 2 hours to prepare a binder composition for electrodes. The polymerization conversion at this point was 90 %.

The polymer contained in the obtained binder composition for electrodes had a hydrodynamic diameter of 345 nm and a fluorine atom content of 11.2 %.

[manufacture of lithium ion secondary battery]

(1) Manufacture of positive electrode for lithium ion secondary batteries

1 part (in terms of solids content) of the CMC2200 of Daicel Chemical Industries, Ltd. as a thickener, 100 parts (in terms of solid content) of iron lithium phosphate as a positive electrode active material, 5 parts (in terms of solid content) of acetylene black as a conducting agent and 25 parts of water were injected into a double-screw planetary mixer (TK HIVIS MIX 2P-03, trade name of PRIMIX CORPORATION) and stirred at 60 rpm for 1 hour. Thereafter, 2 parts (in terms of solids content) of the binder composition for electrodes prepared above was added and stirred for 1 hour to obtain paste. After 10 parts of water was added to the obtained paste, the resulting mixture was stirred and mixed at 200 rpm for 2 minutes, at 1,800 rpm for 5 minutes and at 1,800 rpm for 15 minutes under vacuum by means of a stirring defoaming machine (Thinky Mixer of Thinky Corporation) to prepare slurry for positive electrodes.

The slurry for electrodes prepared above was uniformly applied to the surface of a collector composed of a 30 μm-thick aluminum foil by means of a doctor blade to ensure that the thickness of the coating film became 90 μm after drying and dried at 120°C for 20 minutes to obtain a coating film. Thereafter, the coating film was pressed by means of a roll press to ensure that the density of the film became 1. 6 g/cm$^3$ so as to form an electrode active material layer to obtain a laminate. This laminate was punched to manufacture a positive electrode in a disk shape having a diameter of 15.95 mm for use in a lithium ion secondary battery.

The adhesion of the obtained positive electrode for lithium ion secondary batteries is shown in Table 1 below.

(2) Manufacture of negative electrode for lithium ion secondary batteries

4 parts (in terms of solid content) of polyvinylidene fluoride (PVdF, KF Polymer, trade name of Kureha Corporation), 100 parts (in terms of solid content) of graphite as a negative electrode active material and 80 parts of N-methylpyrrolidone (NMP) were first injected into a double-screw planetary mixer (TK HIVIS MIX 2P-03, trade name of PRIMIX CORPORATION) and stirred at 60 rpm for 1 hour. After 20 parts of NMP was further injected, a stirring defoaming machine (Thinky Mixer of Thinky Corporation) was used to stir and mix them together at 200 rpm for 2 minutes, at 1,800 rpm for 5 minutes and at 1,800 rpm for 1.5 minutes under reduced pressure to prepare slurry for negative electrodes.

Then, the slurry for negative electrodes prepared above was uniformly applied to the surface of a collector which was composed of a 20 μm-thick copper foil by means of a doctor blade to ensure that the thickness of the coating film became 100 μm after drying and dried at 120°C for 20 minutes to obtain a coating film. Thereafter, the coating film was pressed by means of a roll press to ensure that the density of the film became 1.8 g/cm$^3$ so as to form a laminate. This laminate was punched to manufacture a negative electrode in a disk shape having a diameter of 16.16 mm for use

in a lithium ion secondary battery.

(3) Manufacture of lithium ion secondary battery

The negative electrode for lithium ion secondary batteries manufactured above was mounted on a bipolar coin cell (HS Flat Cell, trade name of Hohsen Corp.) in a globe box. Then, a separator composed of a disk-like polypropylene porous film having a diameter of 18 mm (Celgard #2400, trade name of Celgard K.K.) was mounted on this negative electrode, and then an electrolytic solution was injected into the cell to prevent the entry of air. After the positive electrode for lithium ion secondary batteries prepared above was mounted on this separator, the above bipolar coin cell was sealed up by screwing the exterior body of the cell to manufacture a lithium ion secondary battery.
The electrolytic solution used herein is a solution prepared by dissolving $LiPF_6$ (lithium hexafluorophosphate) in a mixed solvent of ethylene carbonate and ethyl methyl carbonate (weight ratio of 1/1) to a concentration of 1 mol/L.
The above operation was repeated to manufacture three lithium ion secondary batteries. Each one of them was used for the evaluation of capacity retention, the peeling of a polar plate after it was left at a high temperature and self-discharge rate after it was left at a high temperature.
The evaluation results are shown in Table 1 below.

[evaluation of lithium ion secondary battery]

(1) Evaluation of capacity retention

One of the lithium ion secondary batteries manufactured above was charged in accordance with a constant current (1.0 C)·constant voltage (4.2 V) system and then discharged in accordance with a constant current (1.0 C) system as one cycle. Charge and discharge were repeated 200 times (200 cycles). The measurement values of discharged capacity ($C_{1cycle}$) at the time of the first cycle (first time) and discharged capacity ($C_{200cycle}$) at the time of the 200-th cycle (200-th time) were inserted into the following mathematical expression (1) to calculate the capacity retention (%) after 200 cycles as capacity retention.

$$\text{Capacity retention after 200 cycles (\%)} = \{(C_{200cycle}) \div (C_{1cycle})\} \times 100 \qquad (1)$$

"1.0 C" denotes a current value when a cell having a certain electric capacitance is discharged at a constant current and this discharge ends in one hour under measurement conditions. "0.2 C" denotes a current value when the discharge ends in 5 hours.

(2) Evaluation of peeling of polar plate after left at a high temperature

One of the lithium ion secondary batteries manufactured above was charged at normal temperature (25°C) in accordance with the constant current (0.2 C)·constant voltage (4.2 V) system and then discharged in accordance with the constant current (0.2 C) system. Thereafter, it was charged at normal temperature (25°C) in accordance with the constant current (0.2 C)·constant voltage (4.2 V) system. After the cell charged second time was left at 85°C for 3 days, the temperature was returned to normal temperature (25°C), and the cell was discharged in accordance with the constant current (0.2 C) system.
Thereafter, the cell was disassembled to observe the existence of the peeling of the polar plate visually. As for evaluation criteria, "A" indicates that it was not confirmed that the electrode active material layer peeled off from the collector and "B" indicates that it was confirmed that the electrode active material layer peeled off from the collector.

(3) Evaluation of self-discharge rate after left at a high temperature

The discharged capacity $C_{before}$ of one of the lithium ion secondary batteries manufactured above was measured when it was discharged in accordance with the constant current (0.2C) system after it was charged at normal temperature (25°C) in accordance with the constant current (0.2 C)· constant voltage (4.2 V) system. Thereafter, the battery was charged at normal temperature (25°C) in accordance with the constant current (0.2 C)· constant voltage (4.2 V) system. Then, after the battery which had been charged second time was left at 85°C for 3 hours, the temperature was returned to normal temperature (25°C), and the discharged capacity $C_{after}$ of the battery after it was discharged in accordance with the constant current (0.2C) system was measured. A value obtained by inserting these measurement values into

the following mathematical expression (2) was taken as self-discharge rate after the battery was left at a high temperature. It can be evaluated that as this value becomes smaller, self-discharge at a high temperature is suppressed more.

$$\text{Self-discharge rate after left at high temperature (\%)} = [\{(C_{before}) - C_{after}\}] \div (C_{before})] \times 100 \qquad (2)$$

Examples P-2 to P-4 and P-6 to P-8 and Comparative Examples p-1 and p-2

The operation of Example P-1 was repeated except that the contents of the polymer (A1) and the monomers were changed as shown in Table 1 below to prepare binder compositions for electrodes, and lithium ion secondary batteries were manufactured by using these binder compositions for electrodes and evaluated.
The evaluation results are shown in Table 1.

Example P-5

[preparation of binder composition for electrodes]

150 parts of water and 0.2 part of sodium dodecylbenzene sulfonate were injected into a separable flask having a capacity of 7 liters, and the inside of the separable flask was fully substituted by nitrogen.
Meanwhile, 60 parts of water, 0.8 part in terms of solids content of an ether sulfate type emulsifier (Adeca Reasoap SR1025, trade name of ADEKA CORPORATION) as an emulsifier and monomers in a ratio shown in Table 1 were added to another vessel and fully stirred to prepare a monomer emulsified liquid containing a mixture of the above monomers.
Thereafter, the inside of the above separable flask was heated, and 0.5 part of ammonium persulfate as a polymerization initiator was added when the inside temperature of the separable flask reached 60°C. When the inside temperature of the separable flask reached 70°C, the addition of the monomer emulsified liquid prepared above was started so that the monomer emulsified liquid was slowly added over 3 hours while the inside temperature of the separable flask was kept at 70°C. Thereafter, the inside temperature of the separable flask was raised to 85°C, and this temperature was kept for 3 hours to carry out a polymerization reaction. After 3 hours, the separable flask was cooled to terminate the reaction, and ammonia water was added to adjust pH to 7. 6 so as to prepare a binder composition for electrodes.
The hydrodynamic diameter of the polymer contained in the obtained binder composition for electrodes was 127 nm.

[manufacture and evaluation of lithium ion secondary battery]

A lithium ion secondary battery was manufactured and evaluated in the same manner as in the above Example P-1 except that the binder composition for electrodes prepared above was used.
The evaluation results are shown in Table 1.

Comparative Examples P-3 and P-4

The operation of Example P-5 was repeated except that the contents of the monomers were changed as shown in Table 1 below to prepare binder compositions for electrodes. Lithium ion secondary batteries were manufactured by using these binder compositions for electrodes and evaluated.
The evaluation results are shown in Table 1.

Example P-9

[preparation of binder composition for electrodes]

150 parts of water as an aqueous medium and 20 parts in terms of solids content of the latex containing PVdF produced in the above Synthesis Example 1 were injected into a separable flask having a capacity of 7 liters, and the inside of the separable flask was fully substituted by nitrogen.
Meanwhile, 60 parts of water, 2 parts in terms of solids content of an ether sulfate type emulsifier (Adeca Reasoap SR1025, trade name of ADEKA CORPORATION) as an emulsifier, and 20 parts of acrylonitrile (AN), 20 parts of methyl methacrylate (MMA), 10 parts of 2-ethylhexyl acrylate (2EHA), 25 parts of butyl acrylate (BA) and 5 parts of

acrylic acid (AA) as monomers were added to another vessel and fully stirred to prepare a monomer emulsified liquid containing a mixture of the above monomers.

Thereafter, the inside of the above separable flask was heated, and 0.5 part of ammonium persulfate and 0.1 part of sodium sulfite as polymerization initiators were added when the inside temperature of the separable flask reached 50°C. When the inside temperature of the separable flask reached 60°C, the addition of the monomer emulsified liquid prepared above was started so that the monomer emulsified liquid was slowly added over 2 hours while the inside temperature of the separable flask was kept at 60°C. Thereafter, this temperature was kept for 2 hours to carry out a polymerization reaction so as to prepare a binder composition for electrodes. The polymerization conversion was 90 % up till now.

Then, after the inside temperature of the above separable flask was raised to 80°C, 0.2 part of potassium persulfate was added to this and stirred for 2 hours. Thereafter, the reaction solution was cooled to terminate the reaction, and an aqueous solution of sodium hydroxide was added to adjust pH to 7.5 so as to prepare a binder composition for electrodes.

[manufacture and evaluation of lithium ion secondary battery]

A lithium ion secondary battery was manufactured and evaluated in the same manner as in the above Example P-1 except that the binder composition for electrodes prepared above was used.

The evaluation results are shown in Table 1.

Table 1: manufacture and evaluation (1) of lithium ion secondary batteries, examples in which the binder composition for electrodes of the present invention is applied to a positive electrode

| | | | | Examples | | | | | | |
|---|---|---|---|---|---|---|---|---|---|---|
| | | | | P-1 | P-2 | P-3 | P-4 | P-5 | P-6 | P-7 |
| Polymer (A) | Polymer (A1) | | PVdF | 20 | 20 | 20 | 5 | 0 | 20 | 35 |
| | monomer | (a1) | 5FPA | 0 | 0 | 0 | 0 | 10 | 0 | 0 |
| | | (a2) | MAN | 0 | 0 | 0 | 0 | 0 | 20 | 0 |
| | | | AN | 20 | 10 | 40 | 40 | 30 | 0 | 10 |
| | | (a3) | MMA | 20 | 25 | 10 | 15 | 20 | 20 | 20 |
| | | | 2EHA | 10 | 10 | 10 | 10 | 10 | 10 | 10 |
| | | | BA | 25 | 30 | 15 | 25 | 25 | 25 | 20 |
| | | (a4) | AA | 5 | 5 | 5 | 5 | 5 | 5 | 5 |
| | | (a5) | ST | 0 | 0 | 0 | 0 | 0 | 0 | 0 |
| | Hydrodynamic diameter(nm) | | | 345 | 353 | 342 | 440 | 127 | 350 | 260 |
| | Content of fluorine atom (mass%) | | | 11.2 | 11.5 | 11.3 | 2.7 | 2.3 | 11.3 | 19.5 |
| | HOMO value(eV) | | | -10.911 | -10.876 | -11.026 | -10.866 | -10.943 | -11.029 | -11.108 |
| | LUMO value(eV) | | | 0.571 | 0.608 | 0.643 | 0.560 | 0.138 | 0.557 | 0.656 |
| | LUMO-HOMO (energy gap, eV) | | | 11.481 | 11.485 | 11.669 | 11.426 | 11.081 | 11.586 | 11.764 |
| Evaluation results | Adhesion(mM/2cm) | | | 520 | 530 | 440 | 460 | 510 | 480 | 480 |
| | Capacity retention (after 200 cycles, %) | | | 92 | 93 | 90 | 86 | 85 | 90 | 92 |
| | Peeling of polar plate after left at high temperature (85°C,3 days) | | | A | A | A | A | A | A | A |
| | Self-discharge rate after left at high temperature (%, 85°C,3 days) | | | 20 | 22 | 15 | 18 | 20 | 18 | 20 |

(to be continued)

Table 1 (continued)

manufacture and evaluation (1) of lithium ion secondary batteries, examples in which the binder composition for electrodes of the present invention is applied to a positive electrode

| | | | | Example | | Comparative Example | | | |
|---|---|---|---|---|---|---|---|---|---|
| | | | | P-8 | P-9 | p-1 | p-2 | p-3 | p-4 |
| Polymer (A) | Monomer(A1) | | PVdF | 50 | 20 | 20 | 70 | 0 | 0 |
| | monomer | (a1) | 5FPA | 0 | 0 | 0 | 0 | 0 | 17 |
| | | (a2) | MAN | 0 | 0 | 0 | 0 | 0 | 0 |
| | | | AN | 10 | 20 | 5 | 10 | 15 | 0 |
| | | (a3) | MMA | 15 | 20 | 15 | 5 | 15 | 0 |
| | | | 2EHA | 5 | 10 | 15 | 5 | 30 | 0 |
| | | | BA | 15 | 25 | 35 | 5 | 35 | 23 |
| | | (a4) | AA | 5 | 5 | 5 | 5 | 5 | 5 |
| | | (a5) | ST | 0 | 0 | 5 | 0 | 0 | 55 |
| | Hydrodynamic diameter(nm) | | | 175 | 345 | 343 | 165 | 120 | 150 |
| | Content of fluorine atom (mass%) | | | 27.5 | 11.2 | 11.3 | 41.1 | 0 | 5.8 |
| | HOMO value(eV) | | | -11.149 | -10.911 | -9.215 | -11.177 | -10.767 | -10.009 |
| | LUMO value(eV) | | | 0.617 | 0.571 | 0.332 | 0.626 | 0.626 | 0.183 |
| | LUMO-HOMO (energy gap, eV) | | | 11.766 | 11.481 | 9.547 | 11.803 | 11.393 | 10.192 |
| Evaluation results | Adhesion(mM/2cm) | | | 430 | 550 | 500 | 250 | 600 | 240 |
| | Capacity retention (after 200 cycles, %) | | | 85 | 80 | 65 | 70 | 75 | 80 |
| | Peeling of polar plate after left at high temperature (85°C,3 days) | | | A | A | A | B | A | A |
| | Self-discharge rate after left at high temperature (%, 85°C,3 days) | | | 25 | 30 | 60 | 45 | 80 | 3 |

The abbreviations in the column for monomers in Table 1 mean the following substances.

5FPA: 2,2,3,3,3-pentafluoropropyl acrylate
MAN: methacrylonitrile
AN: acrylonitrile
MMA: methyl methacrylate
2EHA: 2-ethylhexyl acrylate
BA: butyl acrylate
AA: acrylic acid
ST: styrene

<manufacture and evaluation (2) of lithium ion secondary batteries, examples in which the binder composition for electrodes of the present invention is applied for a negative electrode for lithium ion secondary batteries>

Example N-1 and Comparative Example n-1

[preparation of binder composition for electrodes]

The operation of Example P-1 was repeated except that the contents of the polymer (A1) and the monomers were changed as shown in Table 2 below in the [preparation of binder composition for electrodes] of the above Example P-1 to prepare binder compositions for electrodes.

[manufacture and evaluation of lithium ion secondary battery]

(1) Manufacture of negative electrode for lithium ion secondary batteries

1 part (in terms of solids content) of a thickener (CMC2200, trade name of Daicel Chemical Industries, Ltd.), 100 parts (in terms of solid content) of graphite as a negative electrode active material and 68 parts of water were injected into a double-screw planetary mixer (TK HIVIS MIX 2P-03, trade name of PRIMIX CORPORATION) and stirred at 60 rpm for 1 hour. Thereafter, 1 part of each of the binder compositions for electrodes prepared in the above Example and Comparative Example was added and stirred for 1 hour to obtain paste. 34 parts of water was added to the obtained paste and stirred and mixed at 200 rpm for 2 minutes, at 1, 800 rpm for 5 minutes and at 1,800 rpm for 1.5 minutes under reduced pressure by means of a stirring defoaming machine (Thinky Mixer of Thinky Corporation) to prepare

slurry for negative electrodes.

Then, the slurry for negative electrodes prepared above was uniformly applied to the surface of a collector which was composed of a 20 μm-thick copper foil by means of a doctor blade to ensure that the thickness of the coating film became 100 μm after drying and dried at 120°C for 20 minutes to obtain a coating film. Thereafter, the coating film was pressed by means of a roll press to ensure that the density of the film became 1.8 g/cm$^3$ to form an electrode active material layer so as to form a laminate. This laminate was punched to manufacture a negative electrode in a disk shape having a diameter of 16.16 mm for use in a lithium ion secondary battery.

The adhesion of the obtained negative electrode for lithium ion secondary batteries is shown in Table 2 below.

(2) Manufacture of positive electrode for lithium ion secondary batteries

4 parts (in terms of solid content) of polyvinylidene fluoride (KF Polymer, trade name of Kureha Corporation), 100 parts (in terms of solid content) of iron lithium phosphate as a positive electrode active material, and 5 parts (in terms of solid content) of acetylene black as a conducting agent, and 25 parts of N-methyl pyrrolidone (NMP) were injected into a double-screw planetary mixer (TK HIVIS MIX 2P-03, trade name of PRIMIX CORPORATION) and stirred at 60 rpm for 1 hour. After 10 parts of NMP was further injected, the resulting mixture was stirred and mixed at 200 rpm for 2 minutes, at 1,800 rpm for 5 minutes and at 1,800 rpm for 1.5 minutes under reduced pressure by means of a stirring defoaming machine (Thinky Mixer of Thinky Corporation) to prepare slurry for positive electrodes.

Then, the slurry for positive electrodes prepared above was uniformly applied to the surface of a collector which was composed of a 30 μm-thick aluminum foil by means of a doctor blade to ensure that the thickness of the coating film became 90 μm after drying and dried at 120°C for 20 minutes to obtain a coating film. Thereafter, the coating film was pressed by means of a roll press to ensure that the density of the film became 3.8 g/cm$^3$ to form an electrode active material layer so as to form a laminate. This laminate was punched to manufacture a positive electrode in a disk shape having a diameter of 15. 95 mm for use in a lithium ion secondary battery.

(3) Manufacture and evaluation of lithium ion secondary battery

A lithium ion secondary battery was manufactured and evaluated in the same manner as in the above Example P-1 except that the negative electrode and the positive electrode manufactured above were used.

The evaluation results are shown in Table 2.

Table 2. manufacture and evaluation (2) of lithium ion secondary batteries, examples in which the binder composition for electrodes of the present invention is applied for a negative electrode

| | | | | Example | Comparative Example |
|---|---|---|---|---|---|
| | | | | N-1 | n-1 |
| Polymer (A) | Polymer | | PVdF | 20 | 20 |
| | Monomer | (a1) | 5FPA | 0 | 0 |
| | | (a2) | MAN | 0 | 0 |
| | | | AN | 20 | 5 |
| | | (a3) | MMA | 20 | 15 |
| | | | 2EHA | 10 | 15 |
| | | | BA | 25 | 35 |
| | | (a4) | AA | 5 | 5 |
| | | (a5) | ST | 0 | 5 |
| | Hydrodynamic diameter(nm) | | | 345 | 343 |
| | Content of fluorine atom (mass%) | | | 11.2 | 11.4 |
| | HOMO value (eV) | | | -10.911 | -9.215 |
| | LUMO value (eV) | | | 0.571 | 0.332 |
| | LUMO-HOMO (energy gap, eV) | | | 11.481 | 9.547 |

(continued)

| | | Example | Comparative Example |
|---|---|---|---|
| | | N-1 | n-1 |
| Evaluation | Adhesion (mM/2cm) | 520 | 510 |
| | Capacity retention (after 200 cycles, %) | 88 | 60 |
| | Peeling of polar plate after left at high temperature (85°C, 3 days) | A | A |
| | Self-discharge rate after left at high temperature (%, 85°C, 3 days) | 25 | 55 |

The abbreviations in the column for monomers in Table 2 mean the same as in Table 1.

<manufacture and evaluation of electrical double-layer capacitors, examples in which the binder composition for electrodes of the present invention is applied for an electrode for electrical double-layer capacitors>

Example C-1

[preparation of binder composition for electrodes]

The operation of Example P-1 was repeated except that the contents of the polymer (A1) and the monomers were changed as shown in Table 3 below in the [preparation of binder composition for electrodes] in the above Example P-1 to prepare a binder composition for electrodes.

[production of electrical double-layer capacitor]

(1) Production of electrode for electrical double-layer capacitors

100 parts of activated carbon (Kuraray Coal YP, trade name of Kuraray Chemical Co., Ltd.) as an electrode active material, 6 parts of conductive carbon (Denca Black, trade name of Denki Kagaku Kogyo K.K.), 2 parts of a thickener (CMC2200, trade name of Daicel Chemical Industries, Ltd.) and 278 parts of water were injected into a double-screw planetary mixer (TK HIVIS MIX SP-03 of PRIMIX CORPORATAION) and stirred at 60 rpm for 1 hour. Thereafter, 4 parts (in terms of solids content) of the binder composition for electrodes prepared above was added and stirred for another 1 hour to obtain paste. Water was added to the obtained paste to adjust its solids content to 25 mass%, and the resulting mixture was stirred and mixed at 200 rpm for 2 minutes, at 1,800 rpm for 5 minutes and at 1,800 rpm for 1.5 minutes under reduced pressure by means of a stirring defoaming machine (Thinky Mixer of Thinky Corporation) to prepare slurry for electrodes.

Then, the slurry for positive electrodes prepared above was uniformly applied to the surface of a collector which was composed of a 30 μm-thick aluminum foil by means of a doctor blade to ensure that the thickness of the coating film became 150 μm after drying and dried at 120°C for 20 minutes to obtain a coating film. Thereafter, the coating film was pressed by means of a roll press to ensure that the density of the film became 1.5 g/cm$^3$ to form an electrode active material layer so as to obtain a laminate. This laminate was punched to produce two disk-like electrodes having diameters of 15.95 mm and 16.16 mm, respectively, for electrical double-layer capacitors.

The adhesions of the obtained electrodes for electrical double-layer capacitors are shown in Table 3 below.

(2) Manufacture of electrical double-layer capacitor

The electrode for electrical double-layer capacitors having a diameter of 16.16 mm was placed on a bipolar coin cell (HS Flat Cell, trade name of Hohsen Corp.) in a globe box. Then, a disk-like cellulose-based separator having a diameter of 18 mm (TF4535, trade name of Nippon Kodoshi Corporation) was mounted on this electrode, and an electrolytic solution was injected into the cell to prevent the entry of air. After the electrode for electrical double-layer capacitors having a diameter of 15.95 mm was mounted on this separator, the above bipolar coin cell was sealed up by screwing the exterior body of the cell to manufacture an electrical double-layer capacitor.

The electrolytic solution used herein is a propylene carbonate solution containing triethylmethylammonium

tetrafluoroborate having a concentration of 1 mol/L.

The above operation was repeated to manufacture three electrical double-layer capacitors. Each one of the capacitors was used for the evaluation of capacitor cycle characteristics, the peeling of a polar plate after left at a high temperature and self-discharge rate after left at a high temperature.

[evaluation of electrical double-layer capacitor]

(1) Evaluation of capacitor cycle characteristic

One of the electrical double-layer capacitors manufactured above was charged in accordance with a constant current (10 mA/F)·constant voltage (2.5 V) system and then discharged in accordance with a constant current (10m A/F) ·constant voltage (0.5 V) system as one cycle. Charge and discharge were repeated 200 times (200 cycles). A value obtained by inserting the measurement values of discharged capacity ($C_{3cycle}$) at the time of the third cycle (third time) and discharged capacity ($C_{200cycle}$) at the time of the 200th cycle (200th time) into the following mathematical expression (3) was evaluated as capacitor cycle characteristic (%).

$$\text{Capacitor cycle characteristic (\%)} = \{(C_{200cycle}) \div (C_{3cycle})\} \times 100 \qquad (3)$$

(2) Evaluation of peeling of polar plate after left at high temperature

This was carried out in the same manner as in the [(2) evaluation of peeling of polar plate after left at high temperature] in the above Example P-1.

(3) Self-discharge rate after left at high temperature

One of the electrical double-layer capacitors manufactured above was charged at normal temperature (25°C) for 1 hour in accordance with a constant current (10 mA/F) ·constant voltage (2.5 V) system. The voltage $V_{before}$ at this point was measured. After the charged capacitor was left at 85°C for 3 hours, its temperature was returned to normal temperature (25°C), and it was discharged at normal temperature (25) for 1 hour in accordance with a constant current (10 mA/F)·constant voltage (2. 5 V) system to measure its voltage $V_{after}$. A value obtained by inserting these measurement values into the following mathematical expression (4) was taken as self-discharge rate after left at a high temperature.

$$\text{Self-discharge rate after left at high temperature (\%)} = \{(V_{before}) - (V_{after})\} \div (V_{before})] \times 100 \qquad (2)$$

Comparative Example c-1

The operation of Example P-1 was repeated except that the contents of the polymer (A1) and the monomers were changed as shown in Table 3 below in the [preparation of binder composition for electrodes] in the above Example P-1 to prepare a binder composition for electrodes.

An electrical double-layer capacitor was manufactured and evaluated in the same manner as in the above Example C-1 except that this binder composition for electrodes was used.

The evaluation results are shown in Table 3.

Comparative Example c-2

The operation of Example P-5 was repeated except that the contents of the monomers were changed as shown in Table 3 below in the [preparation of binder composition for electrodes] in the above Example P-5 to prepare a binder composition for electrodes.

An electrical double-layer capacitor was manufactured and evaluated in the same manner as in the above Example C-1 except that this binder composition for electrodes was used.

The evaluation results are shown in Table 3.

Table 3: manufacture and evaluation of electrical double-layer capacitors, examples in which the binder composition for electrodes of the present invention was used for an electrode for capacitors

| | | | | Example | Comparative Example | |
|---|---|---|---|---|---|---|
| | | | | C-1 | c-1 | c-2 |
| Polymer (A) | Polymer (A1) | | PVdF | 20 | 20 | 0 |
| | Monomer | (a1) | 5FPA | 0 | 0 | 0 |
| | | (a2) | MAN | 0 | 0 | 0 |
| | | | AN | 20 | 5 | 15 |
| | | (a3) | MMA | 20 | 15 | 15 |
| | | | 2EHA | 10 | 15 | 30 |
| | | | BA | 25 | 35 | 35 |
| | | (a4) | AA | 5 | 5 | 5 |
| | | (a5) | ST | 0 | 5 | 0 |
| | Hydrodynamic diameter (nm) | | | 352 | 343 | 120 |
| | Content of fluorine atom (mass%) | | | 11.2 | 11.3 | 0 |
| | HOMO value (eV) | | | -10.911 | -9.215 | -10.767 |
| | LUMO value (eV) | | | 0.571 | 0.332 | 0.626 |
| | LUMO-HOMO (energy gap, eV) | | | 11.481 | 9.547 | 11.393 |
| Evaluation | Adhesion(mM/2cm) | | | 250 | 240 | 230 |
| | Capacitor cycle characteristic (%) | | | 93 | 90 | 75 |
| | Peeling of polar plate after left at high temperature (85°C, 3 days) | | | A | A | A |
| | Self-discharge rate after left at high temperature (%, 85 °C,3 days) | | | 1 | 5 | 5 |

The abbreviations in the column for monomers in Table 3 mean the same as in Table 1.

As understood from the above examples, the binder composition for electrodes of the present invention is superior in durability in a high-temperature environment to the binder materials of the prior art, has excellent adhesion and can provide an electrode whose self-discharge is highly suppressed.

Since the dispersion medium used in the binder composition for electrodes of the present invention is an aqueous medium, it does not have an adverse effect on the environment and has high safety for people handling the composition.

## Claims

1. A binder composition for electrodes, comprising a polymer and an aqueous medium, wherein
the polymer consists of a polymer (A) which has a HOMO value calculated by a semiempirical molecular orbital method of -10 eV or less, a difference between its LUMO value calculated by the semiempirical molecular orbital method and its HOMO value of 10.5 eV or more and a fluorine atom content measured by combustion ion chromatography of 2 to 30 mass%.

2. The binder composition for electrodes according to claim 1, wherein the polymer (A) comprises 3 to 50 mass% of a recurring unit derived from a monomer having a cyano group (a2) and 20 to 75 mass% of a recurring unit derived from a (meth)acrylic acid alkyl ester monomer (a3).

3. The binder composition for electrodes according to claim 2, wherein the polymer (A) is produced by polymerizing

a monomer mixture containing the monomer having a cyano group (a2) and the (meth) acrylic acid alkyl ester monomer (a3) in the presence of a polymer having a fluorine atom (A1).

**4.** The binder composition for electrodes according to claim 2, wherein the polymer (A) is produced by polymerizing a monomer mixture containing a monomer having a fluorine atom (a1), the monomer having a cyano group (a2) and the (meth)acrylic acid alkyl ester monomer (a3).

**5.** The binder composition for electrodes according to any one of claims 1 to 4, wherein the hydrodynamic diameter Rh measured by a dynamic light scattering method of the polymer (A) is 70 to 500 nm.

**6.** Slurry for electrodes, which contains an electrode active material and the binder composition for electrodes of any one of claims 1 to 4.

**7.** An electrode comprising a collector and an electrode active material layer which is formed on the surface of the collector through the steps of applying the slurry for electrodes of claim 6 and drying it.

**8.** An electrochemical device comprising the electrode of claim 7.

**INTERNATIONAL SEARCH REPORT**

International application No.
PCT/JP2011/071293

A. CLASSIFICATION OF SUBJECT MATTER
*H01M4/62*(2006.01)i, *H01M4/139*(2010.01)i, *H01G9/058*(2006.01)n

According to International Patent Classification (IPC) or to both national classification and IPC

B. FIELDS SEARCHED

Minimum documentation searched (classification system followed by classification symbols)
H01M4/62, H01M4/139, H01G9/058

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2008/120786 A1 (Nippon Zeon Co., Ltd.), 09 October 2008 (09.10.2008), entire text & US 2010/0112441 A1 & CN 101652884 A & KR 10-2009-0125782 A | 1-8 |
| A | JP 2009-246137 A (JSR Corp.), 22 October 2009 (22.10.2009), entire text (Family: none) | 1-8 |
| A | JP 2010-146870 A (Nippon A & L Inc.), 01 July 2010 (01.07.2010), entire text (Family: none) | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 December, 2011 (16.12.11) | 27 December, 2011 (27.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10302799 A
- WO 02039518 A
- JP 2006140081 A


### Non-patent literature cited in the description


- **M.J.S. DEWAR et al.** *Journal of American Chemical Society,* 1985, vol. 107, 3902